# EUROPÄISCHE PATENTSCHRIFT

(11) **EP 1 133 911 B1**
(45) Veröffentlichungstag und Bekanntmachung des Hinweises auf die Patenterteilung: **23.11.2005**
(21) Anmeldenummer: 01104336.1
(22) Anmeldetag: 23.02.2001
(51) Int. Cl.: A01D 45/02

(54) **Vorrichtung zum Pflücken der Fruchtstände stängeliger Erntegüter**
Device for picking fruits of stalk crops
Dispositif pour récolter les fruits des plantes à tige

(30) Priorität: 15.03.2000 DE 10012088
(43) Veröffentlichungstag der Anmeldung: 19.09.2001
(73) Patentinhaber: CLAAS Saulgau GmbH, 88348 Bad Saulgau (DE)
(72) Erfinder: Rauch, Hans, 88348 Bad Saulgau (DE)

(56) Entgegenhaltungen:
- EP-A- 0 976 316
- DE-C- 4 344 669
- US-A- 5 060 464
- US-A- 5 680 750
- US-A- 5 704 202

## Beschreibung

Die Erfindung betrifft eine Vorrichtung zum Pflücken der Fruchtstände stängeliger Erntegüter gemäß dem Oberbegriff des Anspruchs 1.

Die DE 43 44 669 offenbart einen gattungsgleichen Pflückvorsatz, dessen Pflückeinheiten von paarweise zusammenarbeitenden Durchzugsrotoren gebildet werden, denen obenseitig jeweils ein durch ebenfalls paarweise angeordnete Pflückplatten begrenzter Durchzugsspalt zugeordnet ist. Damit die Breite des Pflückspaltes an unterschiedliche Emtegutstängeldurchmesser angepaßt werden kann, sind die Pflückplatten in ihrer Lage zueinander verstellbar. In der Praxis sind derartige Pflückplattenverstellungen so ausgeführt, dass entweder jedem Pflückplattenpaar eine separate Pflückplattenverstellung zugeordnet ist oder andererseits alle verstellbaren Pflückplatten von einem gemeinsamen Verstellmechanismus zentral betätigt werden können. In Abhängigkeit von der Anzahl der Pflückeinheiten eines Pflückvorsatzes mit separaten Pflückplattenverstellungen führt die Anordnung der separaten Verstellmechanismen zu einer sehr aufwendigen und kostenintensiven Konstruktion, die zudem ein erheblich höheres Eigengewicht des gesamten Vorsatzgerätes verursacht. Demgegenüber stellt eine zentrale Pflückplattenverstellung hohe Anforderungen an die die verstellbaren Pflückplatten miteinander verbindenden Koppelglieder. Eine sich über die gesamte Breite des Vorsatzgerätes erstreckende Koppelstange muss eine hohe Steifigkeit besitzen, damit durch äußere Einflüsse hervorgerufene Kraftwirkungen nicht sofort zu einer derart starken Verformung der Koppelstange führen, die ein Klemmen des gesamten Pflückplattenverstellmechanismus in den die Koppelstange führenden Lagern während des Verstellvorganges hervorruft. Zudem muss die Lagerung der Koppelstange so gestaltet sein, dass ein Eindringen von Schmutzpartikeln weitestgehend ausgeschlossen ist, da es sonst zu einem deutlichen Anstieg der Lagerreibung kommt, wodurch die Leichtgängigkeit des Verstellmechanismus stark beeinträchtigt wird. Im ungünstigsten Fall kommt es zum Blockieren des Verstellmechnaismus.
Ferner ist die Unterbringung des Verstellmechanismus in den Randbereichen stark eingeschränkt, sodass die im allgemeinen als Hubzylinder ausgeführten Verstellorgane innerhalb des Vorsatzgerätes angeordnet sind und konstruktiv aufwendige Koppelmechanismen notwendig sind, die den Kolbenstangenhub des oder der Zylinder in eine Stellbewegung der verschiebbaren Pflückplatten wandeln.

Ein ähnlicher Pflückvorsatz mit der Merkmalen des Oberbegriffs des Anspruchs 1 wird in der US-A-5 060 464 beschrieben.

Der Erfindung liegt die Aufgabe zugrunde eine Vorrichtung zum Pflücken der Fruchtstände stängeliger Emtgüter so zu gestalten, dass die in ihrer Lage veränderbaren, den Pflückspalt begrenzenden Pflückplatten auf konstruktiv einfache und kostengünstige Weise miteinander koppelbar sind und der Pflückplattenverstellmechanismus auch unter widrigen äußeren Bedingungen sicher arbeitet.

Erfindungsgemäß wird die Aufgabe durch eine Vorrichtung zum Pflücken der Fruchtstände stängeliger Erntegüter mit den kennzeichnenden Merkmalen des Anspruchs 1 gelöst.

Indem die Pflückplattenverstellung in einen ersten und einen zweiten Pflückplattenverstellmechanismus unterteilt ist, wobei beide Pflückplattenverstellmechanismen über jeweils wenigstens ein Verstellglied verfügen, die untereinander und mit einem Verstellorgan in Wirkverbindung stehen, werden zwei kurz bauende Teilmechanismen erreicht, die jeweils nur für die Hälfte der verstellbaren Pflückplatten als Verstellmechanismus fungieren. Auf diese Weise werden die notwendigen Verstellkräfte jedes Verstellmechanismus reduziert und zudem erstreckt sich jeder Verstellmechanismus nur etwa über die halbe Breite des Vorsatzgerätes, was letztlich zu einem verringerten Einfluss widriger äußerer Bedingungen, wie beispielweise Stöße oder Verschmutzungen, auf die Verstellmechanismen führt.

Durch die Verwendung von Zahnradsegmenten als Verstellglieder jedes Pflückplattenverstellmechanismus wird sichergestellt, dass die relativ kurzen Verstellwege der Pflückplatten dennoch durch einen großen Hub des Verstellorgans ermöglicht werden, wobei die von dem Verstellorgan aufzubringenden Verstellkräfte gering bleiben. Durch die Verwendung von ineinandergreifenden Zahnradsegmenten wird außerdem auf konstruktiv einfache Weise dafür gesorgt, dass nur ein einziges Verstellorgan für die Pflückplattenverstellmechanismen erforderlich ist.

Um möglichst kurz bauende Verstellmechanismen zu erhalten, ist es vorteilhaft, die Verstellglieder und das wenigstens eine Verstellorgan im Mittelbereich zwischen den Pflückeinheiten des Vorsatzgerätes anzuordnen, sodass die die verstellbaren Pflückplatten miteinander koppelnden Schubstangen nur jeweils etwa die halbe Breite des Vorsatzgerätes überspannen müssen.

Eine besonders einfache Ausführung wird dann erreicht, wenn das eine Verstellorgan als Hubzylinder ausgeführt ist, dessen Druckbeaufschlagung über wenigstens eine der ohnehin am Trägerfahrzeug vorhandenen Druckquellen erfolgt.

Nimmt das Vorsatzgerät nur eine geringe Anzahl von Pflückeinheiten auf, sodass die zu erwartenden Verstellkräfte und die zu überbrückende Arbeitsbreite gering sind, können in einer weiteren konstruktionsvereinfachenden Ausführungsform die Schubstangen der Verstellmechanismen nur über ein als Tandemzylinder ausgeführtes Verstellorgan miteinander verbunden sein, wobei jede der Kolbenstangen des Tandemzylinders mit jeweils einer Schubstange gelenkig verbunden ist.

Konstruktionsvereinfachend werden bei einer Ausführung, bei der nur eine der paarweise zusammenarbeitenden Pflückplatten in ihrer Lage veränderbar ist die jeweils rechts und links von den mittig angeordneten Verstellgliedern und dem Verstellorgan liegenden Pflückplatten von jeweils einer gemeinsamen Schubstange lageverstellt.

Sind in einer weiteren Ausführungsform zur Realisierung kurzer Verstellwege jede der paarweise zusammenarbeitenden Pflückplatten in ihrer Lage quer zur Fahrtrichtung verstellbar, so wird dann ein einfacher konstruktiver Aufbau erreicht, wenn jeweils alle links vom Pflückspalt angeordneten Pflückplatten und jeweils alle rechts vom Pflückspalt angeordneten Pflückplatten von einer separaten Schubstange angelenkt werden. Damit bei einer derartigen Ausführung jede Schubstange nicht die gesamte Arbeitsbreite des Vorsatzgerätes überdecken muss, können die für die links- und rechtsseitigen Pflückplatten vorgesehenen Schubstangen wenigstens zweiteilig ausgeführt sein, wobei eine konstruktiv besonders einfache Ausführung dann erreicht wird, wenn die Schubstangen im Bereich der Verstellglieder geteilt ausgeführt sind.

Damit das die Schubstangen und damit die verstellbaren Pflückplatten bewegende Verstellorgan lastfrei anlaufen kann, sind die Schubstangen mit Ringschraüben versehen, in deren Innenöflnungen die Mitnahmestifte der Verstellglieder laufen. Auf diese Weise legen die Mitnahmestifte der Verstellglieder bei Druckbeaufschlagung des Verstellorgans eine bestimmte Wegstrecke quer zur Fahrtrichtung zurück, ohne sofort auch die Schubstangen und damit die lageveränderlichen Pflückplatten zu verschieben. Um bei einer derartigen Ausführung sicherzustellen, dass die über die Verstellglieder miteinander gekoppelten Schubstangen stets die gleiche Wegstrecke zurücklegen, kann den beiden Schubstangen in einer weiteren vorteilhaften Ausführungsform eine beide Schubstangen miteinander verbindende Zugfeder zugeordnet sein.

Um die Verstellung der Pflückspaltbreite noch besser auf die den Pflückspalt durchlaufenden Durchmesser der Erntegutstängel einzustellen, kann wenigstens einer der paarweise zusammenarbeitenden Pflückplatten eine weitere, selbsttätig arbeitende Pflückplattenverstellung zugeordnet sein, die ein automatisches Anpassen an verschiedene Stängeldurchmesser ermöglicht. Eine besonders feinfühlige Feineinstellung wird dann erreicht, wenn jeder Pflückplatte eine weitere derartige derartige Pflückplattenverstellung zugeordnet wird.

Auf konstruktiv einfache Weise wird eine deratige, selbsttätig arbeitende Pflückplattenverstellung durch den Einsatz wenigstens eines Druckfedermechanismus erreicht, der die jeweilige Pflückplatte in horizontaler Richtung abstützt, sodass sie belastungsabhängig gegen die Wirkung dieser Druckfeder ausweichen kann.

Weitere vorteilhafte Ausgestaltungen sind Gegenstand weiterer Unteransprüche und werden nachfolgend anhand von Zeichnungen näher erläutert.

Es zeigen
- Figur 1: eine schamtische Darstellung der erfindungsgemäßen Erntevorrichtung in der Draufsicht
- Figur 2: eine schematische Darstellung einer Pflückeinheit in Frontansicht
- Figur 3: eine Detailansicht der erfindungsgemäßen Pflückplattenverstellung in Draufsicht
- Figur 4: eine Schnittdarstellung der erfindungsgemäßen Pflückplattenverstellung nach Linie IV-IV in Figur 3
- Figur 5: eine Detailansicht der erfindungsgemäßen Pflückvorrichtung mit Tandemzylinder

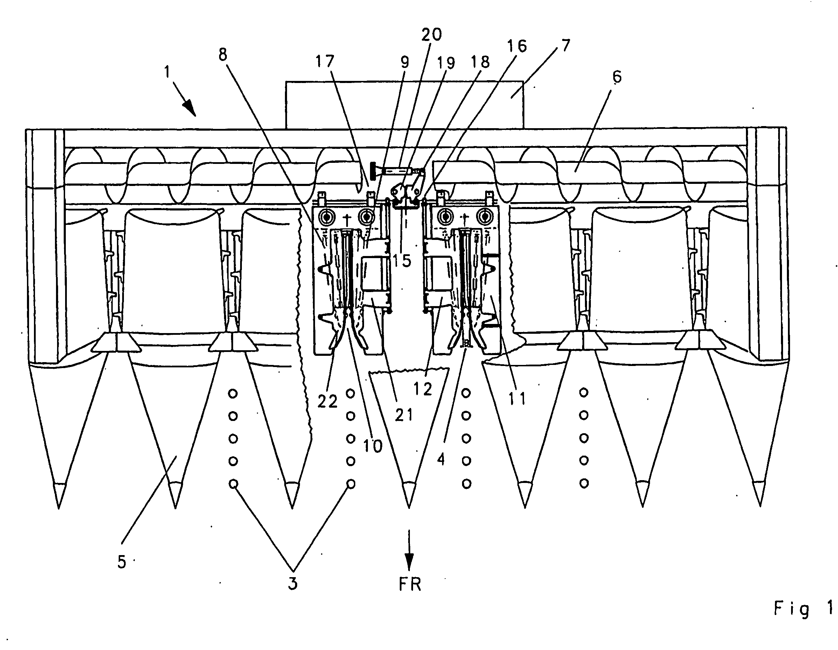

Figur 1 zeigt schematisch eine erfindungsgemäße Vorrichtung 1 zum Pflücken der Fruchtstände stängeliger Erntegüter 3, wobei die Pflückvorrichtung 1 im Ausführungsbeispiel sechs nebeneinander und quer zur Fahrtrichtung FR angeordnete Pflückeinheiten 4 aufnimmt, die obenseitig wenigstens teilweise von Abteilerhauben 5 abgedeckt werden. Im rückwärtigen Bereich ist den Pflückeinheiten 4 ein als Querförderschnecke 6 ausgeführtes Querförderorgan zugeordnet, welches die von den Pflückeinheiten 4 geemteten Fruchtstände mittig zusammenführt und an nachfolgende nicht dargestellte Arbeitsorgane eines nicht näher dargestellten, die Pflückvorrichtung 1 aufnehmenden Trägerfahrzeugs 7, vorzugsweise ein Mähdrescher oder Feldhäcksler, übergibt.

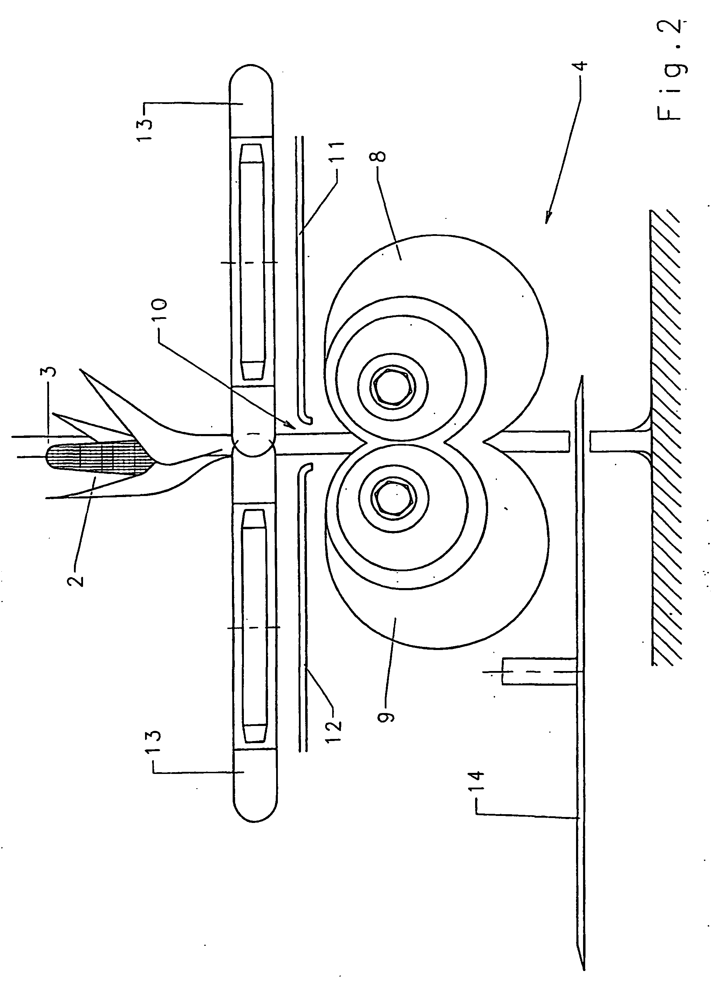

Gemäß Figur 2 wird jede Pflückeinheit 4 von paarweise zusammenarbeitenden Pflückwalzen 8, 9 gebildet, wobei den Pflückwalzen 8, 9 obenseitig den Pflückspalt 10 zwischen sich ausbildende ebenfalls paarweise zusammenarbeitende Pflückplatten 11, 12 zugeordnet sind. Oberhalb der Pflückplatten 11, 12 sind in an sich bekannter Weise als Förderketten 13 ausgeführte Förderorgane angeordnet, die die beim Durchziehen der Erntegutstängel 3 durch den Pflückspalt 10 an den Pflückplatten 11, 12 abgestriffenen Fruchtstände 2 aus dem Bereich der Pflückwalzen 8, 9 abfördem. Zur Zerkleinerung der Erntegutstängel 3 kann den paarweise zusammmenarbeitenden Pflückwalzen 8, 9 untenseitig wenigstens ein Stängelzerkleinerer 14 zugeordnet sein, der den von den Pflückwalzen 8, 9 erfassten Erntegutstängel 3 in die Verrottung beschleunigende Stücke zerkleinert.

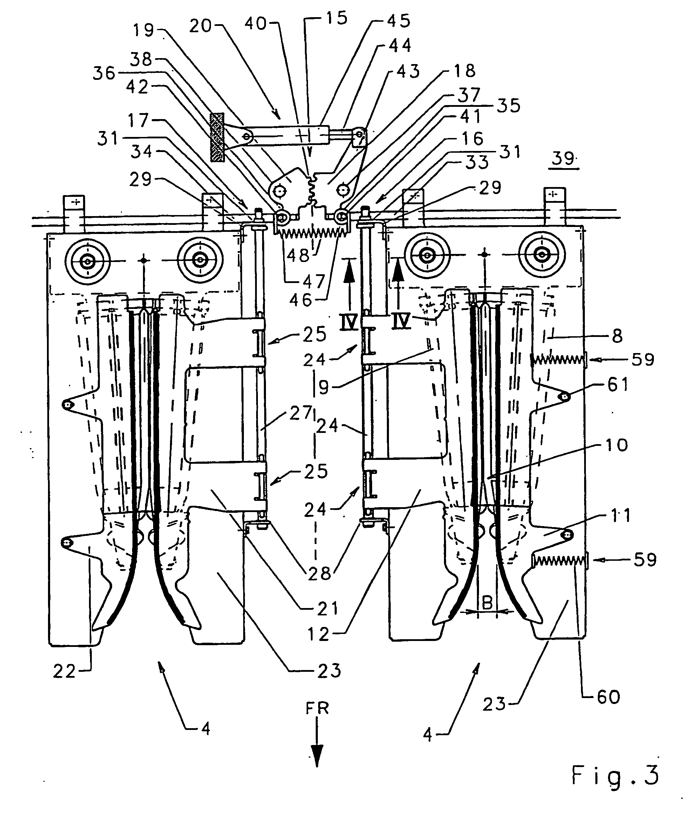

Entsprechend den Figuren 1 und 3 sind die Pflückplatten 11, 12, 21, 22 über eine Pflückplattenverstellung 15 miteinander gekoppelt. Erfindungsgemäß und in noch näher zu beschreibender Weise unterteilt sich die Pflückplattenverstellung 15 in einen ersten und einen zweiten Pflückplattenverstellmechanismus 16, 17, wobei die Pflückplattenverstellmechanismen 16, 17 über Verstellglieder 18, 19 miteinander und mit einem Verstellorgan 20 verbunden sind. In einer ersten Ausführungsform sind den paarweise zusammenarbeitenden Pflückwalzen 8, 9 obenseitig eine am Rahmen 23 der Pflückeinheit 4 befestigte Pflückplatte 11, 22 und eine zu dieser Pflückplatte 11, 22 in ihrer Lage quer zur Fahrtrichtung FR verschiebbare Pflückplatte 12, 21 zugeordnet. Die in ihrer Lage veränderbare Pflückplatte 12, 21 nimmt in ihrem, der ihr zugeordneten lagefixierten Pflückplatte 11, 22 abgewandten Bereich zylinderförmige Führungen 24, 25 auf. Die zylinderförneigen Führungen 24, 25 werden von Führungsstangen 26, 27 durchsetzt, die in axialer Richtung durch Winkelflansche 28, 29 lagefixiert sind, wobei die Winkelflansche 28, 29 einfachstenfalls mit dem Rahmen 23 der jeweiligen Pflückeinheit 4 verschraubt werden.

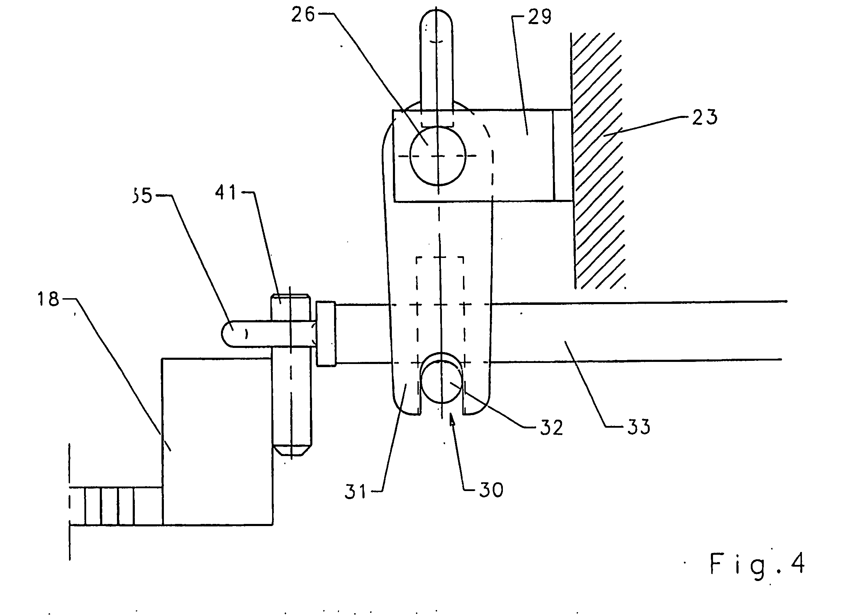

Jede Führungsstange 26, 27 ist in ihrem rückwärtigen Bereich drehfest mit einem in seinem unteren Bereich über eine Schlitzführung 30 verfügenden Halteflansch 31 verbunden (Fig. 4). Die Schlitzführung 30 wird dabei von einem bolzenförmigen Mitnahmeelement 32 durchsetzt, welches einenends drehfest mit einer quer zur Fahrtrichtung und im rückwärtigen Bereich der Pflückeinheiten 4 verlaufenden, am Hauptrahmen 39 in nicht näher dargestellter Weise gelagerten Schubstange 33, 34 verbunden ist. Die Schubstangen 33, 34 nehmen in ihrem einander zugewandten Bereich Ringschrauben 35, 36 lösbar auf. In diesem einander zugewandten Bereich sind die Verstellglieder 18, 19 und das Verstellorgan 20 der erfindungsgemäßen Pflückplattenverstellung 15 angeordnet. Die Verstellglieder 18, 19 sind als Zahnradsegmente 18, 19 ausgeführt, die um vertikale Achsen 37, 38 umlaufend am Hauptrahmen 39 des Vorsatzgerätes 1 in der Weise befestigt sind, dass die Zähne 40 der Zahnradsegmente 18, 19 wenigstens teilweise ineinander greifen. Die Zahnradsegmente 18, 19 sind in ihren den Schubstangen 33, 34 zugewandten Bereichen mit Mitnahmestiften 41, 42 versehen, welche die jeweilige Ringschraube 35, 36 wenigstens teilweise durchsetzen. Im beschriebenen Ausführungsbeispiel ist dem Zahnradsegment 18 eine hebelartige Verlängerung 43 angeformt, die in ihrem äußeren Bereich schwenkbeweglich mit der Kolbenstange 44 eines als Hubzylinder 45 ausgeführten Verstellorgans 20 verbunden ist.

Wird der Hubzylinder 45 über ein nicht dargestelltes Leitungssystem vom Trägerfahrzeug 7 aus druckbeaufschlagt, wird die Kolbenstange 44 entweder in den Hubzylinder 45 hinein- oder aus diesem herausgeschoben. Dabei werden die ineinander greifenden Zahnradsegmente 18, 19 in Drehbewegung versetzt, die dazu führt, dass die mit den Zahnradsegmenten 18, 19 verbundenen Schubstangen 33, 34 aufeinanderzu- oder voneinanderwegbewegt werden. Über die mit den Schubstangen 33, 34 zusammenarbeitenden Halteflansche 31 wird dabei die Lage der verschiebbaren Pflückplatte 12, 21 zu der ihr benachbarten ortsfesten Pflückplatte 11, 22 verändert, wodurch je nach Bewegungsrichtung eine Vergrößerung oder eine Verkleinerung der Breite B des Pflückspaltes 10 eintritt. Auf diese Weise kann der Pflückspalt 10 jeder Pflückeinheit 4 stufenlos innerhalb eines bestimmten Bereiches eingestellt werden. Um die Störanfälligkeit der Pflückplattenverstellung 15 gegenüber äußeren Einflüssen wie Schmutz oder Stoßbelastungen zu verringern, sind die Verstellglieder 18, 19 und das Verstellorgan 20 mittig zwischen den den Pflückvorsatz 1 bildenden Pflückeinheiten 4 angeordnet, sodass die die verstellbaren Pflückplatten 12, 21 verschiebenden Schubstangen 33, 34 nur etwa die halbe Breite des Vorsatzgerätes 1 durchsetzen. In Abhängigkeit von der Anzahl der Pflückeinheiten 4 des Vorsatzgerätes 1 werden jeweils alle links von dem Verstellglied 19 liegenden verschiebbaren Pflückplatten 21 von der Schubstange 34 und alle rechts von dem Verstellglied 18 liegenden verschiebbaren Pflückplatten 12 von der Schubstange 33 in ihrer Lage quer Fahrtrichtung FR verändert (Draufsicht nach Figur 3).

Durch die Verwendung von Zahnradsegmenten 18, 19 zur Verstellung der Schubstangen 33, 34, wobei wenigstens einem Zahnradsegment 18 eine hebelartige Verlängerung 43 zur Anlenkung des Verstellorgans 20 angeformt ist, wird sichergestellt, dass der relativ geringe Hub der verschiebbaren Pflückplatten 12, 21 dennoch durch einen großen Zylinderhub des Verstellorgans 20 erreich-bar ist, sodass die von dem als Hubzylinder 45 ausgeführten Verstellorgan 20 aufzubringenden Verstellkräfte gering bleiben.

Zur Erhöhung der Lebensdauer des Verstellorgans 20 ist im Moment der Druckbeaufschlagung des Verstellorgans 20 ein lastfreies Aus- bzw. Einfahren der Kolbenstange 44 in der Weise vorgesehen, dass die Mitnahmestifte 41, 42 der Verstellglieder 18, 19 innerhalb der Öffnungen 46, 47 der Ringschrauben 35, 36 einen bestimmten Weg zurücklegen können, bevor sie die jeweilige Schubstange 33, 34 quer zur Fahrtrichtung verschieben. Damit sichergestellt ist, dass bei einer derartigen Ausführung dennoch beide Schubstangen 33, 34 und damit die jeweils von den Schubstangen 33, 34 verstellbaren Pflückplatten 12, 21 stets den gleichen Weg zurücklegen, können die Schubstangen 33, 34 zusätzlich über eine Zugfeder 48 miteinander gekoppelt sein, die das Aufeinanderzu- und Voneinanderwegbewegen der Schubstangen 33, 34 unterstützt.

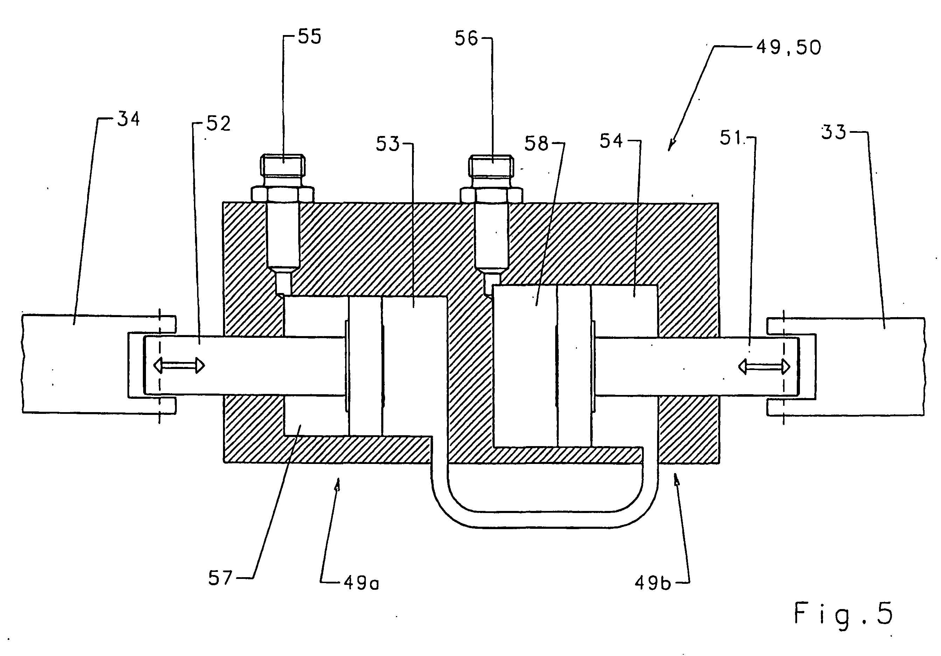

Verfügt die Pflückvorrichtung 1 beispielsweise nur über eine geringe Anzahl von Pflückeinheiten 4 oder sind die zu überwindenden Verstellkräfte gering, können die Verstellglieder 18, 19 und das Verstellorgan 20 auch durch ein einziges als Tandemzylinder 49 ausgeführtes Verstellorgan 50 ersetzt sein (Figur 5), wobei die eine Kolbenstange 51 direkt mit der Schubstange 33 und die andere Kolbenstange 52 direkt mit der Schubstange 34 gelenkig verbunden ist. Damit die beiden Kolbenstangen 51, 52 lastunabhängig gleichzeitig Aus- oder Einfahren, sind in an sich bekannter Weise die kolbenflächenseitige Kammer 53 des einen Zylinderbereiches 49a mit der kolbenstangenseitigen Kammer 54 des anderen Zylinderbereichs 49b verbunden, während die äußeren Anschlüsse 55, 56 an der kolbenstangenseitigen Kammer 57 des Zylinderbereichs 49a und an der kolbenflächenseitigen Kammer 58 des Zylinderbereichs 49b angeschlossen sind.

Um die Verstellwege der verschiebbaren Pflückplatten 12, 21 möglichst gering zu halten, können in einer weiteren nicht dargestellten Ausführungsform auch die in Figur 2 ortsfesten Pflückplatten 11, 22 in gleicher Weise wie für die Pflückplatten 12, 21 bereits beschrieben quer zur Fahrtrichtung FR verstellbar angeordnet sein. Auf diese Weise ist es möglich, dass jede Pflückplatte 11, 12, 21, 22 nur den halben Weg zurücklegen muss, um die gewünschte Pflückspaltbreite B zu erreichen. Die in Figur 2 dargestellte erfindungsgemäße Pflückplattenverstellung 15 wäre dann im einfachsten Fall dahingehend abzuändern, dass sich die Schubstangen 33, 34 über die gesamte Breite des Vorsatzgerätes 1 erstrecken und jeweils mit den rechtsseitig bzw. linksseitig vom Pflückspalt 10 angeordneten Pflückplatten 11, 12, 21, 22 in der bereits beschriebenen Weise in Wirkverbindung stehen. Bei einer derartigen Ausführung muss jedoch sichergestellt werden, dass die Schubstangen 33, 34 so an den Verstellgliedern 18, 19 angelenkt sind, dass eine Kollision der Schubstangen 33, 34 untereinander vermieden wird. Um ebenfalls Schubstangen 33, 34 von geringer Länge zu erhalten, kann jede nun durchgehende Schubstange 33, 34 im Bereich der Mitnahmestifte 42, 43 der Verstellorgane 18, 19 geteilt sein, sodass jede Schubstange 33, 34 in nicht dargestellter Weise zweiteilig ausgeführt ist. Ferner können auch bei einer derartigen Ausführung die Verstellglieder 18, 19 und das Verstellorgan 20 durch ein einziges Verstellorgan 49, 50 gemäß Figur 5 ersetzt sein, um die bereits beschriebenen Effekte zu erzielen.

Um die Feineinstellung der Pflückspaltbreite zu verbessern, kann in einer weiteren Ausführungform die bereits beschriebene Pflückspaltverstellung 15 als Grobeinstellung verwendet werden und wenigstens eine Plückplatte 11 der paarweise zusammenarbeitenden Pflückplatten 11, 12 über eine weitere, selbsttätig arbeitende Pflückplattenverstellung 59 verfügen, die in Abhängigkeit vom Durchmesser der Erntegutstängel 3 eine Querbewegung der Pflückplatte 11 im Sinne einer Feineinstellung zulässt. Im einfachsten Fall kann diese weitere Pflückplattenverstellung 59 durch eine oder mehrere Druckfedern 60 gebildet werden, die die Pflückplatte 11 mit dem Rahmen 23 der Pflückeinheit 4 verbinden und so der über die Schraubverbindungen 61 in vertikaler Richtung lagefixiert am Rahmen 23 angeordneten Pflückplatte 11 einen Freiheitsgrad quer zur Fahrtrichtung FR verschafft. In nicht dargestellter Weise kann auch jede Pflückplatte 11, 12 ,21, 22 des Vorsatzgerätes 1 mit einer weiteren derartigen Pflückplattenverstellung 59 ausgerüstet sein.

### Bezugszeichenliste

- 1: Pflückvorsatz
- 2: Fruchtstände
- 3: stängeliges Erntegut
- 4: Pflückeinheit
- 5: Abteilerhaube
- 6: Querförderschnecke
- 7: Trägerfahrzeug
- 8: Pflückwalze
- 9: Pflückwalze
- 10: Pflückspalt
- 11: Pflückplatte
- 12: Pflückplatte
- 13: Förderkette
- 14: Stängelzerkleinerer
- 15: Pflückplattenverstellung
- 16: Pflückplattenverstellmechanismus
- 17: Pflückplattenverstellmechanismus
- 18: Verstellglied, Zahnradsegment
- 19: Verstellglied, Zahnradsegment
- 20: Verstellorgan
- 21: Pflückplatte
- 22: Pflückplatte
- 23: Rahmen
- 24: Führung
- 25: Führung
- 26: Führungsstange
- 27: Führungsstange
- 28: Winkelflansch
- 29: Winkelflansch
- 30: Schlitzführung
- 31: Halteflansch
- 32: Mitnahmeelement
- 33: Schubstange
- 34: Schubstange
- 35: Ringschraube
- 36: Ringschraube
- 37: vertikale Achse
- 38: vertikale Achse
- 39: Hauptrahmen
- 40: Zahn
- 41: Mitnahmestift
- 42: Mitnahmestift
- 43: hebelartige Verlängerung
- 44: Kolbenstange
- 45: Hubzylinder
- 46: Ringschraubenöffnung
- 47: Ringschraubenöffnung
- 48: Zugfeder
- 49: Tandemzylinder
- 49a,b: Zylinderbereiche
- 50: Verstellorgan
- 51: Kolbenstange
- 52: Kolbenstange
- 53: kolbenflächenseitige Kammer
- 54: kolbenstangenseitige Kammer
- 55: Leitungsanschluß
- 56: Leitungsanschluß
- 57: kolbenstangenseitige Kammer
- 58: kolbenflächenseitige Kammer
- 59: Pflückplattenverstellung
- 60: Druckfeder
- 61: Schraubverbindungen

- B: Pflückspaltbreite
- FR: Fahrtrichtung

## Patentansprüche

1. Vorrichtung zum Pflücken der Fruchtstände stängeliger Erntegüter mit wenigstens zwei über zumindest jeweils eine Pflückwalze verfügenden Pflückeinheiten, wobei der wenigstens einen Pflückwalze obenseitig paarweise zusammenarbeitende und zwischen sich einen Pflückspalt ausbildende Pflückplatten zugeordnet sind, die wenigstens teilweise über eine Pflückplattenverstellung miteinander gekoppelt sind, wobei die Pflückplattenverstellung in einen ersten und einen zweiten Pflückplattenverstellmechanismus untergliedert ist und der erste und der zweite Pflückplattenverstellmechanismus über jeweils wenigstens ein Verstellglied miteinander und mit zumindest einem Verstellorgan verbunden sind,
**dadurch gekennzeichnet,**
**dass** jedem Pflückplattenverstellmechanismus (18, 19) ein umlaufendes Zahnradsegment (18, 19) als Verstellglied zugeordnet ist, und wenigstens ein Teil der Zähne (40) der Zahnradsegmente (18, 19) ineinander greifen, und die Zahnradsegmente (18, 19) mit zumindest einem Verstellorgan (20) verbunden sind.

2. Vorrichtung zum Pflücken der Fruchtstände stängeliger Erntegüter nach Anspruch 1,
**dadurch gekennzeichnet,**
**dass** das wenigstens eine Verstellglied (18, 19) und das wenigstens eine Verstellorgan (20) von einem gemeinsamen Verstellorgan (49, 50) gebildet wird.

3. Vorrichtung zum Pflücken der Fruchtstände stängeliger Erntegüter nach einem oder mehreren der vorhergehenden Ansprüche,
**dadurch gekennzeichnet,**
**dass** das Verstellglied (18, 19) jedes Pflückplattenverstellmechanismus (16, 17) als ein um eine vertikale Achse (37, 38) umlaufendes Zahnradsegment (18, 19) ausgeführt ist und jedem Zahnradsegment (18, 19) wenigstens ein Mitnahmeelement (41, 42) zugeordnet ist.

4. Vorrichtung zum Pflücken der Fruchtstände stängeliger Erntegüter nach einem oder mehreren der vorhergehenden Ansprüche,
**dadurch gekennzeichnet,**
**dass** die Verstellglieder (18, 19, 49, 50) und/oder das wenigstens eine Verstellorgan (20) im Mittelbereich zwischen den wenigstens zwei Pflückeinheiten (4) angeordnet ist.

5. Vorrichtung zum Pflücken der Fruchtstände stängeliger Erntegüter nach einem oder mehreren der vorhergehenden Ansprüche,
**dadurch gekennzeichnet,**
**dass** jeder Pflückplattenverstellemchanismus (16, 17) von einer Schubstange (33, 34) gebildet wird, die mit wenigstens einer Pflückplatte (11, 12, 21, 22) zumindest einer Pflückeinheit (4) und wenigstens einem Verstellglied (18, 19, 49, 50) gelenkig verbunden ist.

6. Vorrichtung zum Pflücken der Fruchtstände stängeliger Erntegüter nach einem oder mehreren der vorhergehenden Ansprüche,
**dadurch gekennzeichnet,**
**dass** das Verstellorgan (20) als Hubzylinder (45) ausgeführt ist und der Hubzylinder (45) mit wenigstens einem Verstellglied (18) der zusammenwirkenden Verstellglieder (18, 19) des ersten und zweiten Pflückplattenverstellmechanismus (16, 17) verbunden ist.

7. Vorrichtung zum Pflücken der Fruchtstände stängeliger Erntegüter nach Anspruch 2,
**dadurch gekennzeichnet,**
**dass** das Verstellorgan (50) ein Tandemzylinder (49) ist, dessen eine Kolbenstange (33) mit dem ersten Pflückplattenverstellmechanismus (16) und dessen zweite Kolbenstange (34) mit dem zweiten Pflückplattenverstellmechanismus (17) gelenkig verbunden ist.

8. Vorrichtung zum Pflücken der Fruchtstände stängeliger Erntegüter nach einem oder mehreren der vorhergehenden Ansprüche,
**dadurch gekennzeichnet,**
**dass** jeder Pflückeinheit (4) paarweise zusammenarbeitende Pflückplatten (11, 12, 21, 22) zugeordnet sind, wobei wenigstens eine der Pflückplatten (12, 21) in ihrer Lage zu der ihr benachbarten Pflückplatte (11, 22) quer zur Fahrtrichtung FR verschiebbar ist.

9. Vorrichtung zum Pflücken der Fruchtstände stängeliger Erntegüter nach Anspruch 8,
**dadurch gekennzeichnet,**
**dass** jeweils die in ihrer Lage veränderbaren Pflückplatten (21) des linken Bereiches und die in ihrer Lage veränderbaren Pflückplatten (12) des rechten Bereiches an einer separaten Schubstange (33, 34) befestigt sind, wobei die separaten Schubstangen (33, 34) die jeweiligen Schubstangen (33, 34) des ersten und des zweiten Pflückplattenverstellmechanismus (16, 17) sind.

10. Vorrichtung zum Pflücken der Fruchtstände stängeliger Erntegüter nach einem oder mehreren der vorhergehenden Ansprüche,
**dadurch gekennzeichnet,**
**dass** jeder Plückeinheit (4) paarweise zusammenarbeitende Pflückplatten (11, 12, 21, 22) zugeordnet sind, wobei alle Pflückplatten (11, 12, 21, 22) in ihrer Lage zu der ihr jeweils benachbarten Pflückplatte (11, 12, 21, 22) quer zur Fahrtrichtung FR verschiebbar sind.

11. Vorrichtung zum Pflücken der Fruchtstände stängeliger Erntegüter nach Anspruch 10,
**dadurch gekennzeichnet,**
**dass** jeweils die linksseitigen Pflückplatten (12, 22) und die rechtsseitigen Pflückplatten (11, 21) jeder Pflückeinheit (4) an separaten Schubstangen (33, 34) befestigt sind, wobei die separaten Schubstangen (33, 34) die jeweiligen Schubstangen (33, 34) des ersten und des zweiten Pflückplattenverstellmechanismus (16, 17) sind.

12. Vorrichtung zum Pflücken der Fruchtstände stängeliger Erntegüter nach Anspruch 11,
**dadurch gekennzeichnet,**
**dass** die Schubstangen (33, 34) wenigstens zweiteilig ausgeführt sind und die Teilung im Bereich der Verstellglieder (18, 19, 49, 50) erfolgt.

13. Vorrichtung zum Pflücken der Fruchtstände stängeliger Erntegüter nach einem oder mehreren der vorhergehenden Ansprüche,
**dadurch gekennzeichnet,**
**dass** jede Schubstange (33, 34) über eine Ringschraube (35, 36) mit dem ihr zugeordneten Verstellglied (18, 19, 49, 50) gekoppelt ist, wobei der Außendurchmesser des Mitnahmeelementes (41, 42) des Verstellgliedes (18, 19) deutlich kleiner als der das Mitnahmeelement (41, 42) aufnehmende Innendurchmesser der Ringschraubenöffnung (46, 47) ist.

14. Vorrichtung zum Pflücken der Fruchtstände stängeliger Erntegüter nach einem oder mehreren der vorhergehenden Ansprüche,
**dadurch gekennzeichnet,**
**dass** die Schubstangen (33, 34) der Pflückplattenverstellmechanismen (16, 17) durch wenigstens eine Zugfeder (48) miteinander gekoppelt sind.

15. Vorrichtung zum Pflücken der Fruchtstände stängeliger Erntegüter nach einem oder mehreren der vorhergehenden Ansprüche,
**dadurch gekennzeichnet,**
**dass** wenigstens einer der paarweise zusammenarbeitenden Pflückplatten (11, 12, 21, 22) eine weitere, selbsttätig arbeitende Pflückplattenverstellung (59) zur Feineinstellung der Breite B des Pflückspaltes (10) zugeordnet ist.

16. Vorrichtung zum Pflücken der Fruchtstände stängeliger Erntegüter nach einem oder mehreren der vorhergehenden Ansprüche,
**dadurch gekennzeichnet,**
**dass** jeder der paarweise zusammenarbeitenden Pflückplatten (11, 12, 21, 22) eine weitere, selbsttätig arbeitende Pflückplattenverstellung (59) zur Feineinstellung der Breite B des Pflückspaltes (10) zugeordnet ist.

17. Vorrichtung zum Pflücken der Fruchtstände stängeliger Erntegüter nach einem oder mehreren der Ansprüche 15 und 16,
**dadurch gekennzeichnet,**
**dass** die weitere Pflückplattenverstellung (59) von wenigstens einer Druckfeder (60) gebildet wird.

## Claims

1. Apparatus for picking the fruits of stalked crop materials comprising at least two picking units which each have at least one picking roller, wherein associated with the at least one picking roller at the top side are picking plates which co-operate in pairs and which form a picking gap between them and which are connected together at least in part by way of a picking plate adjusting means, wherein the picking plate adjusting means is subdivided into a first and a second picking plate adjusting mechanism and the first and second picking plate adjusting mechanisms are connected together and to at least one adjusting member by way of at least one respective adjusting element,
**characterised in that**
a rotating gear segment (18, 19) is associated as an adjusting element with each picking plate adjusting mechanism (18, 19) and at least a part of the teeth (40) of the gear segments (18, 19) engage in each other and the gear segments (18, 19) are connected to at least one adjusting member (20).

2. Apparatus for picking the fruits of stalked crop materials according to claim 1 **characterised in that** the at least one adjusting element (18, 19) and the at least one adjusting member (20) are formed by a common adjusting member (49, 50).

3. Apparatus for picking the fruits of stalked crop materials according to one or more of the preceding claims **characterised in that** the adjusting element (18, 19) of each picking plate adjusting mechanism (16, 17) is in the form of a gear segment (18, 19) rotating about a vertical axis (37, 38) and at least one entrainment element (41, 42) is associated with each gear segment (18, 19).

4. Apparatus for picking the fruits of stalked crop materials according to one or more of the preceding claims **characterised in that** the adjusting elements (18, 19, 49, 50) and/or the at least one adjusting member (20) is arranged in the central region between the at least two picking units (4).

5. Apparatus for picking the fruits of stalked crop materials according to one or more of the preceding claims **characterised in that** each picking plate adjusting mechanism (16, 17) is formed by a pushrod (33, 34) which is hingedly connected to at least one picking plate (11, 12, 21, 22) of at least one picking unit (4) and at least one adjusting element (18, 19, 49, 50).

6. Apparatus for picking the fruits of stalked crop materials according to one or more of the preceding claims **characterised in that** the adjusting member (20) is in the form of a drive cylinder (45) and the drive cylinder (45) is connected to at least one adjusting element (18) of the co-operating adjusting elements (18, 19) of the first and second picking plate adjusting mechanisms (16, 17).

7. Apparatus for picking the fruits of stalked crop materials according to claim 2 **characterised in that** the adjusting member (50) is a tandem cylinder (49) of which one piston rod (33) is pivotably connected to the first picking plate adjusting mechanism (16) and the second piston rod (34) is pivotably connected to the second picking plate adjusting mechanism (17).

8. Apparatus for picking the fruits of stalked crop materials according to one or more of the preceding claims **characterised in that** picking plates (11, 12, 21, 22) co-operating in pairs are associated with each picking unit (4), wherein at least one of the picking plates (12, 21) is displaceable in its position relative to the picking plate (11, 22) adjacent thereto, transversely with respect to the direction of travel FR.

9. Apparatus for picking the fruits of stalked crop materials according to claim 8 **characterised in that** the respective picking plates (21) which are variable in position of the left-hand region and the picking plates (12) which are variable in position of the right-hand region are fixed to a separate pushrod (33, 34), wherein the separate pushrods (33, 34) are the respective pushrods (33, 34) of the first and second picking plate adjusting mechanisms (16, 17).

10. Apparatus for picking the fruits of stalked crop materials according to one or more of the preceding claims **characterised in that** picking plates (11, 12, 21, 22) co-operating in pairs are associated with each picking unit (4), wherein all picking plates (11, 12, 21, 22) are displaceable in their position relative to the picking plate (11, 12, 21, 22) respectively adjacent thereto, transversely with respect to the direction of travel FR.

11. Apparatus for picking the fruits of stalked crop materials according to claim 10 **characterised in that** in each case the left-side picking plates (12, 22) and the right-side picking plates (11, 21) of each picking unit (4) are fixed to separate pushrods (33, 34), wherein the separate pushrods (33, 34) are the respective pushrods (33, 34) of the first and the second picking plate adjusting mechanisms (16, 17).

12. Apparatus for picking the fruits of stalked crop materials according to claim 11 **characterised in that** the pushrods (33, 34) are of an at least two-part structure and the division is in the region of the adjusting elements (18, 19, 49, 50).

13. Apparatus for picking the fruits of stalked crop materials according to one or more of the preceding claims **characterised in that** each pushrod (33, 34) is coupled by way of an eyebolt (35, 36) to the adjusting element (18, 19, 49, 50) associated therewith, wherein the outside diameter of the entrainment element (41, 42) of the adjusting element (18, 19) is markedly smaller than the inside diameter, which receives the entrainment element (41, 42), of the eyebolt opening (46, 47).

14. Apparatus for picking the fruits of stalked crop materials according to one or more of the preceding claims **characterised in that** the pushrods (33, 34) of the picking plate adjusting mechanisms (16, 17) are coupled together by at least one tension spring (48).

15. Apparatus for picking the fruits of stalked crop materials according to one or more of the preceding claims **characterised in that** associated with at least one of the picking plates (11, 12, 21, 22) co-operating in pairs is a further, independently operating picking plate adjusting means (59) for fine adjustment of the width B of the picking gap (10).

16. Apparatus for picking the fruits of stalked crop materials according to one or more of the preceding claims **characterised in that** associated with each of the picking plates (11, 12, 21, 22) co-operating in pairs is a further, independently operating picking plate adjusting means (59) for fine adjustment of the width B of the picking gap (10).

17. Apparatus for picking the fruits of stalked crop materials according to one or more of claims 15 and 16 **characterised in that** the further picking plate adjusting means (59) is formed by at least one compression spring (60).

## Revendications

1. Dispositif pour cueillir les infrutescences de produits à récolter en forme de tiges, avec au moins deux unités de cueillage comportant chacune au moins un tambour de cueillage, au tambour de cueillage au nombre d'au moins un étant associées, en partie haute, des plaques cueilleuses qui coopèrent par paires et forment entre elles un intervalle de cueillage et qui sont accouplées entre elles au moins en partie par l'intermédiaire d'un moyen de réglage de plaques cueilleuses, le moyen de réglage de plaques cueilleuses étant subdivisé en un premier et un second mécanisme de réglage de plaques cueilleuses, et les premier et second mécanismes de réglage de plaques cueilleuses étant reliés entre eux par l'intermédiaire d'au moins un élément de réglage et au moins à un organe de réglage, **caractérisé en ce qu'**à chaque mécanisme de réglage de plaques cueilleuses (18, 19) est associé un segment de roue dentée tournant (18, 19) faisant fonction d'élément de réglage, et au moins une partie des dents (40) des segments de roue dentée (18, 19) s'engrenant les unes dans les autres, et les segments de roue dentée (18, 19) étant reliés à au moins un organe de réglage (20).

2. Dispositif pour cueillir les infrutescences de produits à récolter en forme de tiges selon la revendication 1, **caractérisé en ce que** l'élément de réglage (18, 19), au nombre d'au moins un, et l'organe de réglage (20), au nombre d'au moins un, sont formés par un organe de réglage commun (49, 50).

3. Dispositif pour cueillir les infrutescences de produits à récolter en forme de tiges selon une ou plusieurs des revendications précédentes, **caractérisé en ce que** l'élément de réglage (18, 19) de chaque mécanisme de réglage de plaques cueilleuses (16, 17) est conçu sous la forme d'un segment de roue dentée (18, 19) tournant autour d'un axe vertical (37, 38), et à chaque segment de roue dentée (18, 19) est associé au moins un élément d'entraînement (41, 42).

4. Dispositif pour cueillir les infrutescences de produits à récolter en forme de tiges selon une ou plusieurs des revendications précédentes, **caractérisé en ce que** les éléments de réglage (18, 19, 49, 50) et/ou l'organe de réglage (20), au nombre d'au moins un, sont disposés dans la zone centrale entre les unités de cueillage (4), au nombre d'au moins deux.

5. Dispositif pour cueillir les infrutescences de produits à récolter en forme de tiges selon une ou plusieurs des revendications précédentes, **caractérisé en ce que** chaque mécanisme de réglage de plaques cueilleuses (16, 17) est formé par une barre de poussée (33, 34) qui est reliée de manière articulée à au moins une plaque cueilleuse (11, 12, 21, 22) d'au moins une unité de cueillage (4) et à au moins un élément de réglage (18, 19, 49, 50).

6. Dispositif pour cueillir les infrutescences de produits à récolter en forme de tiges selon une ou plusieurs des revendications précédentes, **caractérisé en ce que** l'organe de réglage (20) est conformé en vérin (45) et le vérin (45) est relié à au moins un élément de réglage (18) des éléments de réglage coopérants (18, 19) des premier et second mécanismes de réglage de plaques cueilleuses (16, 17).

7. Dispositif pour cueillir les infrutescences de produits à récolter en forme de tiges selon la revendication 2, **caractérisé en ce que** l'organe de réglage (50) est un cylindre tandem (49) dont une des tiges de piston (33) est reliée de manière articulée au premier mécanisme de réglage de plaques cueilleuses (16) et dont la seconde tige de piston (34) l'est au second mécanisme de réglage de plaques cueilleuses (17).

8. Dispositif pour cueillir les infrutescences de produits à récolter en forme de tiges selon une ou plusieurs des revendications précédentes, **caractérisé en ce qu'**à chaque unité de cueillage (4) sont associées des plaques cueilleuses (11, 12, 21, 22) qui coopèrent par paires, au moins une des plaques cueilleuses (12, 21) étant mobile, transversalement à la direction de déplacement FR, par rapport à la plaque cueilleuse (11, 22) voisine.

9. Dispositif pour cueillir les infrutescences de produits à récolter en forme de tiges selon la revendication 8, **caractérisé en ce que** les plaques cueilleuses (21) à position variable de la zone gauche et les plaques cueilleuses (12) à position variable de la zone droite sont fixées à des barres de poussée séparées (33, 34), les barres de poussée séparées (33, 34) étant les barres de poussée respectives (33, 34) des premier et second mécanismes de réglage de plaques cueilleuses (16, 17).

10. Dispositif pour cueillir les infrutescences de produits à récolter en forme de tiges selon une ou plusieurs des revendications précédentes, **caractérisé en ce qu'**à chaque unité de cueillage (4) sont associées des plaques cueilleuses (11, 12, 21, 22) qui coopèrent par paires, toutes les plaques cueilleuses (11, 12, 21, 22) étant mobiles, transversalement à la direction de déplacement FR, par rapport à la plaque cueilleuse (11, 12, 21, 22) voisine.

11. Dispositif pour cueillir les infrutescences de produits à récolter en forme de tiges selon la revendication 10, **caractérisé en ce que** les plaques cueilleuses de gauche (12, 22) et les plaques cueilleuses de droite (11, 21) de chaque unité de cueillage (4) sont fixées à des barres de poussée séparées (33, 34), les barres de poussée séparées (33, 34) étant les barres de poussée respectives (33, 34) des premier et second mécanismes de réglage de plaques cueilleuses (16, 17).

12. Dispositif pour cueillir les infrutescences de produits à récolter en forme de tiges selon la revendication 11, **caractérisé en ce que** les barres de poussée (33, 34) sont conformées au moins en deux parties et la division se trouve dans la zone des éléments de réglage (18, 19, 49, 50).

13. Dispositif pour cueillir les infrutescences de produits à récolter en forme de tiges selon une ou plusieurs des revendications précédentes, **caractérisé en ce que** chaque barre de poussée (33, 34) est accouplée à l'élément de réglage (18, 19, 49, 50) qui lui est associé par l'intermédiaire d'une vis à oeil (35, 36), le diamètre extérieur de l'élément d'entraînement (41, 42) de l'élément de réglage (18, 19) étant nettement inférieur à celui du diamètre intérieur de l'ouverture de vis à oeil (46, 47) recevant l'élément d'entraînement (41, 42).

14. Dispositif pour cueillir les infrutescences de produits à récolter en forme de tiges selon une ou plusieurs des revendications précédentes, **caractérisé en ce que** les barres de poussée (33, 34) des mécanismes de réglage de plaques cueilleuses (16, 17) sont accouplées entre elles par l'intermédiaire d'au moins un ressort de traction (48).

15. Dispositif pour cueillir les infrutescences de produits à récolter en forme de tiges selon une ou plusieurs des revendications précédentes, **caractérisé en ce qu'**à au moins une des plaques cueilleuses (11, 12, 21, 22) coopérant par paires est associé un moyen supplémentaire de réglage de plaques cueilleuses (59) à fonctionnement automatique pour le réglage fin de la largeur B de l'intervalle de cueillage (10).

16. Dispositif pour cueillir les infrutescences de produits à récolter en forme de tiges selon une ou plusieurs des revendications précédentes, **caractérisé en ce qu'**à chacune des plaques cueilleuses (11, 12, 21, 22) coopérant par paires est associé un moyen supplémentaire de réglage de plaques cueilleuses (59) à fonctionnement automatique pour le réglage fin de la largeur B de l'intervalle de cueillage (10).

17. Dispositif pour cueillir les infrutescences de produits à récolter en forme de tiges selon une ou plusieurs des revendications 15 et 16, **caractérisé en ce que** le moyen supplémentaire de réglage de plaques cueilleuses (59) est formé par au moins un ressort de compression (60).
